# EUROPÄISCHE PATENTANMELDUNG

(11) **EP 0 860 204 A1**
(43) Veröffentlichungstag der Anmeldung: **26.08.1998**
(21) Anmeldenummer: 97121417.6
(22) Anmeldetag: 05.12.1997
(51) Int. Cl.: B01J 8/44, B01J 8/18, F26B 3/08, B01J 2/16

(54) **Anströmboden für Wirbelschicht-Prozessanlagen**

(30) Priorität: 19.02.1997 DE 19706434
(71) Anmelder: Glatt Ingenieurtechnik GmbH, D-99427 Weimar (DE)
(72) Erfinder: Wand, Bernhard, 99510 Apolda (DE); Rümpler, Karlheinz, Dr., 99425 Weimar (DE); Prahl, Wolfgang, 99425 Weimar (DE); Böber, Reinhard, 99425 Weimar (DE)
(74) Vertreter: Schmitt, Hans, Dipl.-Ing.

(57) **Zusammenfassung**

Die Erfindung betrifft ein Anströmboden für Wirbelschicht-Prozeßanlagen, insbesondere für Wirbelschicht-Granulationstrocknungsanlagen.

Erfindungsgemäß werden Anströmböden mit Durchtrittsöffnungen, die vorzugsweise je Öffnung größer 0,78 mm² sind, mit einem feinmaschigen Drahtgewebe vollflächig versintert. Das Drahtgewebe besteht dabei vorzugsweise aus dem gleichen Werkstoff wie der Anströmboden und ist ober- oder unterhalb des Anströmbodens angeordnet.

## Beschreibung

Die Erfindung betrifft ein Anströmboden für Wirbelschicht-Prozeßanlagen, insbesondere für Wirbelschicht-Granulationstrocknungsanlagen.

Wirbelschichtapparate zur Behandlung von unterschiedlichen Materialien bei denen das Fluidisierungsmedium einen mit Öffnungen versehenen Anströmboden durchströmt sind allgemein bekannt. Die Anströmböden, insbesondere von Wirbelschicht-Granulationstrocknungs-anlagen, haben die Aufgabe, das Fluidisierungsmedium, das gleichzeitig Energieträger für die Verdampfung des Lösungs- oder Suspensionsmittels ist, gleichmäßig über die gesamte Wirbelbodenfläche zu verteilen. Die Anströmböden besitzen in Abhängigkeit des zu fluidisierenden Stoffes, insbesondere dessen Korngröße, Kornform, Dichte und anderer physikalischer Eigenschaften, welche die absolute Größe der Strömungsgeschwindigkeit des Fluidisierungs-mediums im Wirbelbett bestimmt, einen entsprechenden Druckverlust, der durch seine Perforierung erzielt wird. Die Perforierung wird quantifiziert durch das Öffnungsverhältnis, d.h. die freie (durchströmte) Fläche bezogen auf die Gesamtfläche des Wirbelschichtprozessors. Das Öffnungsverhältnis beträgt in der Regel 5 bis 20%.

Für Anströmböden sind unterschiedliche Konstruktionsprinzipien bekannt. Neben den 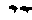 klassischen" Lochböden, bei denen die Löcher gebohrt, gestanzt oder mittels Laser oder Elektronenstrahl eingebracht werden, sind sogenannte Conidurböden, Spaltböden oder auch Sonderkonstruktionen wie zum Beispiel Ventilböden im Einsatz.

Lochböden besitzen den Vorteil, das sie aufgrund der Variationsmöglichkeiten von Lochdurchmesser und Lochteilung, das bedeutet Lochabstand und Lochanordnung, sehr unterschiedlichen Anwendungsfällen gerecht werden. Neben diesem Vorteil besitzen Lochböden weitere Vorteile in Bezug auf preisgünstige Fertigung und hohe mechanische Festigkeit.

Nachteilig sind Lochböden insbesondere dann, wenn große Fluidisierungsluftmengen für den Wirbelschichtprozeß benötigt werden, was in der Regel mit Lochdurchmessern von über einem Millimeter einhergeht. Dann besteht insbesondere bei Fluidisierungsprodukten mit einer großen Korngrößenspreizung die Gefahr des Durchfalls kleiner Partikel durch die Löcher des Anströmbodens in den notwendigerweise erforderlichen - hier als Zuluftkammer bezeichneten - Raum unterhalb des Anströmbodens. Im Falle, daß das Fluidisierungsgut temperatursensibel ist, kann dies in mehrerlei Hinsicht nachteilig sein:
- Die in die Zuluftkammer gefallenen Partikel werden durch die hochtemperierte Fluidisierungsluft thermisch geschädigt, gelangen mit dieser zurück in den Wirbelraum und mindern die Qualität des Produktes.
- Die Partikel schmelzen unter dem Einfluß der hochtemperierten Fluidisierungsluft und verkleben den Anströmboden von unten.
- Die Partikel stellen eine Zündquelle für brand- und/oder explosionsgefährdete Stoffe dar, wenn die Zulufttemperatur die entsprechende Höhe hat.

Der Erfindung liegt die Aufgabe zugrunde, den Anströmboden für Wirbelschicht-Prozeßanlagen, insbesondere für Wirbelschicht-Granulationstrocknungsanlagen so auszubilden bzw. zu gestalten, daß ein Materialdurchfall durch die Öffnungen im Anströmboden nahezu vollständig vermieden wird, die im Stand der Technik beschriebenen Nachteile beseitigt werden und der Durchsatz der Anlage gesteigert wird.

Diese Aufgabe wird erfindungsgemäß mit den Merkmalen des Anspruches 1 gelöst. Vorteilhafte Ausgestaltungen der Erfindung sind in den Unteransprüchen angegeben.

Erfindungsgemäß werden Anströmböden mit Durchtrittsöffnungen, die vorzugsweise je Öffnung größer 0,78 mm² sind, mit einem feinmaschigen Drahtgewebe vollflächig versintert. Das Drahtgewebe besteht dabei vorzugsweise aus dem gleichen Werkstoff wie der Anströmboden und ist ober- oder unterhalb des Anströmbodens angeordnet.

Die offene Fläche des Drahtgewebes unterliegt dabei keiner Einschränkung. Sie ist in Abhängigkeit der Partikelgröße des Fluidisierungsgutes wählbar. Bei der Auslegung des Lochbodens hinsichtlich Lochdurchmesser und Lochteilung, d.h. des Öffnungsverhältnisses ist die Verringerung der offenen Fläche durch das Drahtgewebe zu korrigieren.

Die Vorteile der Erfindung bestehen darin, daß die Gefahr des Durchfalls von feinkörnigen Materialpartikeln durch die Durchtrittsöffnungen im Anströmboden nahezu vollständig vermieden werden. Qualitätsminderungen durch thermisch geschädigtes Material, das durch den Lochboden gefallen ist und mit dem Fluidisierungsmedium aus der Zuluftkammer wieder in den Wirbelraum getragen wird, treten nicht mehr auf. Ebenso wird ein verkleben des Anströmbodens von unten infolge des durchgefallenen Materials verhindert. Durch die Vermeidung des Materialdurchfalls kann die Temperatur des Fluidisierungsmediums angehoben werden, ohne daß dabei das Material thermisch geschädigt wird. Die Temperaturerhöhung ermöglicht eine Durchsatzsteigerung der Anlage.

Die Erfindung wird anhand von Ausführungsbeispielen näher erläutert.

Für einen Wirbelschicht-Granulationsprozeß in der Lebensmittelindustrie wurde standardmäßig ein Lochboden mit einem Öffnungsverhältnis von 9% bei einem Lochdurchmesser von 1,3 mm eingesetzt. Aufgrund der Eigenschaften des Produktes, bei Temperaturen von ca. 160 °C zu denaturieren, wurde der Prozeß mit einer Temperatur der Fluidisierungsluft von 150 °C betrieben, da Partikel mit einem Durchmesser unter 1,3 mm durch die Löcher des Anströmbodens in die Luftkammer gelangten.

Durch den Einsatz eines Anströmbodens mit einem Öffnungsverhältnis von 15% bei dem gleichen Lochdurchmesser von 1,3 mm und einem an den Anströmboden in Strömungsrichtung von unten angesinterten Drahtgewebe mit einer Maschenweite von 300 µm konnte infolge der Vermeidung von Produktdurchfall die Temperatur der Fluidisierungsluft auf 180 °C angehoben werden. Bei gleicher Temperatur im Wirbelraum von 65 °C (Temperaturabfall infolge der Wasserverdampfung) ist damit eine Durchsatzsteigerung um 35% erreicht worden.

Bei der Herstellung von Waschmitteln mittels Wirbelschicht-Granulationsprozeß konnte in gleicher Weise durch die mögliche Temperaturerhöhung von 200 auf 230 °C eine Durchsatzsteigerung von 25% erreicht werden. Dabei wurde der Anströmboden mit einem Drahtgewebe mit einer Maschenweite von 400 µm versehen und das Öffnungsverhältnis des Anströmbodens wurde von 10% auf 16,3% bei gleichem Lochdurchmesser von 1,5 mm erhöht.

## Patentansprüche

1. Anströmboden für Wirbelschicht-Prozeßanlagen, insbesondere für Wirbelschicht-Granulationstrocknungsanlagen, der mit Durchtrittsöffnungen für das Fluidisierungsmedium versehen ist, **dadurch gekennzeichnet**, daß in Strömungsrichtung des Fluidisierungsmediums gesehen ober- oder unterhalb des Anströmbodens ein feinmaschiges Drahtgewebe angeordnet ist.

2. Anströmboden nach Anspruch 1, **dadurch gekennzeichnet**, daß das feinmaschige Drahtgewebe vorzugsweise aus dem gleichen Werkstoff wie der Anströmboden besteht und mit dem Anströmboden vollflächig versintert ist.

3. Anströmboden nach Anspruch 1 und 2, **dadurch gekennzeichnet**, daß bei der Berechnung des Öffnungsverhältnisses des Anströmbodens die Verringerung der offenen Fläche durch das Drahtgewebe berücksichtigt ist.
